# EUROPEAN PATENT SPECIFICATION

(11) **EP 3 271 279 B1**
(45) Date of publication and mention of the grant of the patent: **01.05.2019**
(21) Application number: 15712572.5
(22) Date of filing: 18.03.2015
(51) Int. Cl.: B66B 13/14, B66B 5/00

(54) **SYSTEM AND METHOD FOR CONTROLLING AN ELEVATOR CAR**
SYSTEME UND VERFAHREN ZUR STEUERUNG EINER AUFZUGSKABINE
SYSTÈME ET PROCÉDÉ POUR COMMANDER UNE CABINE D'ASCENSEUR

(43) Date of publication of application: 24.01.2018
(73) Proprietor: Otis Elevator Company, Farmington, CT 06032 (US)
(72) Inventor: SCHROEDER-BRUMLOOP, Helmut Lothar, 13507 Berlin (DE); LOEB, Ruediger, 13507 Berlin (DE)
(74) Representative: Schmitt-Nilson Schraud Waibel Wohlfrom Patentanwälte Partnerschaft mbB
(86) International application number: PCT/EP2015/055697
(87) International publication number: WO 2016/146186

(56) References cited:
- JP-A- H04 121 389
- JP-A- 2011 088 725
- US-A1- 2008 271 956
- US-A1- 2014 339 024

## Description

The present invention generally relates to a system and method for controlling an elevator car and, in particular, relates to a system and method configured to provide an Elevator Car Door Closed signal based on a car door travel distance signal provided by the car door operation control system.

An elevator car door operation control system may include an incremental encoder for determining the position of the elevator car door. The elevator car door operation control system usually controls the drive signal for the car door based on the travel distance signal delivered by the incremental encoder such as to adjust the moving speed of the car door according to a predetermined travel curve.

Modern elevator safety codes like EN 81-20 require to provide a Car Door Closed monitoring signal indicating that the car doors are fully closed. The elevator car is not allowed to travel in response to a transport request, unless the Car Door Closed monitoring signal is set. In normal operation, such Car Door Closed monitoring signal is delivered by a car door safety contact. The car door safety contact is a safety switch which is closed in case the car doors are in fully closed position, but otherwise is open. The car door safety contact is connected in the safety chain of the elevator, such that the safety chain will be open unless the car door is in the fully closed position. However, situations might arise in elevator operation where it becomes necessary to bypass the car door safety contact. For example, such bypass might be necessary in the course of elevator maintenance work in order to identify working contacts of the car door safety contact not working properly. In order to test operation of the elevator without being affected by a potential malfunction of the car door safety contact, the car door safety contact is bypassed and the car is operated without the car door safety contact.

Elevator codes still require to prohibit that the elevator car does move in any situation where the car doors are not fully closed, even where the car door safety contact is bypassed, to reduce the risk of severe damage to the car doors and/or landing doors, and also to reduce a residual risk for the passengers that might otherwise result from an unintentional bypass of the car door safety contacts. State of the art in this respect is an additional contact or sensor at the mechanics of the car door or at the door panels which is closed only in case the car doors are fully closed. Such additional contact or sensor requires additional hardware for the sensor/contact and its corresponding vane or magnet. As the additional sensor is used occasionally only, it tends to be relatively unreliable
US 2014/339024 A1 shows an arrangement and a method for monitoring the operational condition of an automatic door in an elevator, particularly a passenger and/or goods elevator. The arrangement includes an automatic door which includes one or more door leaves, which slide horizontally in their location, a door operator, which includes a door motor and a door mechanism for moving the door leaf horizontally in its location, a closing device for closing the automatic door, a control system for the door operator for controlling the door motor, a device configured to define the operational condition of the closing device and the door mechanism of the automatic door, the device configured to define the operational condition of the closing device and the door mechanism of the automatic door includes a mechanism configured to determine the mechanical energy of the shaft in the door motor of the automatic door during an operating cycle.

In consequence, it is desirable to be able to provide a simpler and more reliable Elevator Car Door Closed signal in situations where the car door safety contact has to be bypassed.

The present invention provides a system and method for operation of an elevator that allows to obtain a secondary Elevator Car Door Closed signal based on the travel distance signal provided by the car door operation control system. There is no need to install an additional sensor or contact.

According to an exemplary embodiment of the invention a system for controlling an elevator comprises a car door operation control system for controlling movement of at least one car door, the car door operating control system including an incremental encoder configured to provide a signal indicative of a travel distance of the car door to the car door operating control system, and an elevator car control system configured to obtain a primary Car Door Closed Signal from a car door safety switch of an elevator safety control system, said elevator car control system configured to obtain a secondary Car Door Closed Signal independent of the primary Car Door Closed Signal based on the travel distance signal provided by the car door operation control system.

According to a further embodiment a method for controlling an elevator comprises controlling movement of at least one car door by a car door operation control system including an incremental encoder configured to provide a signal indicative of a travel distance of the car door to the car door operating control system; and providing a primary Car Door Closed Signal to an elevator car control system by a car door safety switch; and the method comprising obtaining a secondary Car Door Closed Signal independent of the primary Car Door Closed Signal based on the travel distance signal provided by the car door operation control system.

An exemplary embodiment of the invention will be described in more detail with reference to the enclosed figures.
Fig. 1 shows a schematic view of an elevator car door operation control system for controlling movement of an elevator door, and an elevator car control system in communication with the car door operation control system, as used in the system and method of the present invention.
Fig. 2 shows a schematic diagram of an incremental encoder particularly useful for deliveringa car door travel distance signal in the door operation control system shown in FIG. 1.
Fig. 3 shows a flow diagram describing the procedure used in an embodiment of the present invention to obtain a secondary Elevator Car Door Closed signal based on the travel distance signal provided by the door operation control system.

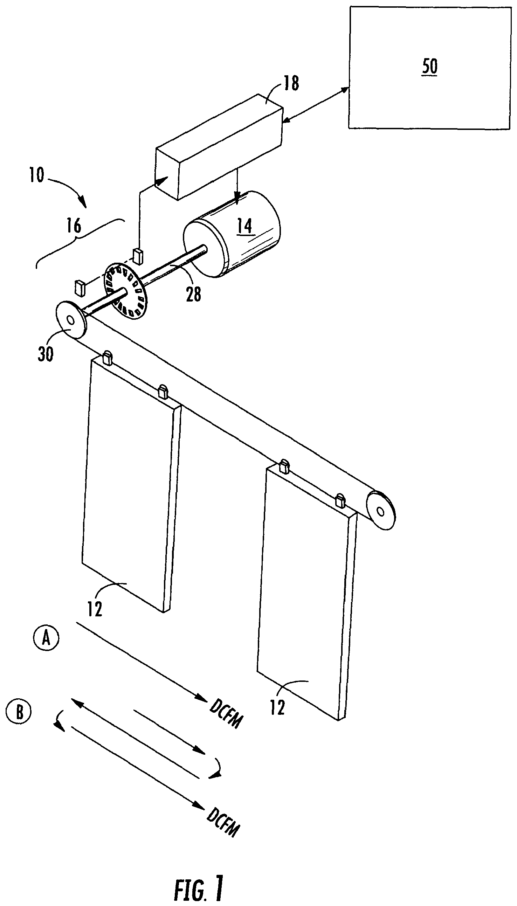

An elevator door operation control system, generally indicated at 10 in Fig. 1, for controlling an elevator door 12 includes a drive 14 for moving an elevator car door 12, an incremental encoder in the form of a pulse encoder 16 for generating and detecting pulses when the car door 12 is in motion, and a car door operation controller 18 for controlling the car door drive 14 in accordance with the pulses generated and detected. Preferably, the car door operation controller 18 includes means for counting the pulses generated and detected by pulse encoder 16 when the elevator door 12 is in motion and means for comparing the counted number of pulses to a stored elevator door travel curve relating the position of the elevator door 12 according to the number of pulses counted to a desired speed of movement of the car door 12.

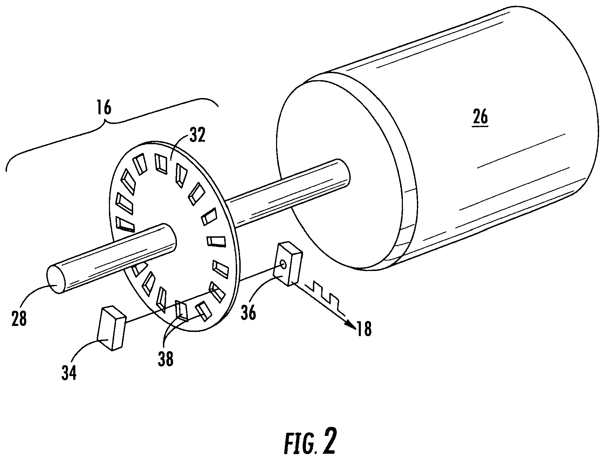

The door drive 14 may include a motor 26 (see Fig. 2) having a drive shaft 28. The drive shaft 28 is connected to the car door 12 by means 30 for converting the rotational motion of the drive shaft 28 to the linear motion of the car door 12. For example, the drive shaft 28 could be connected to the car door 12 by a pulley driving a set of linkage arms. Alternatively, the drive shaft 28 may be connected to a pulley that drives a belt drive connected to the car door 12. In any case, the relationship between the rotation of the drive shaft 28 and the linear distance travelled by the car door 12 is known. This transmission ratio is thus a known factor regardless of whether the car door 12 is a double door system or a single door system. Such rotational motion to linear motion conversion systems are quite well known in the art and further detailed discussion is not believed necessary herein for a full understanding of the present invention.

The motor 26 may be a three phase AC motor that receives drive control signals from the door operation controller 18. For a three phase AC motor the frequency corresponds to the speed of rotation of the drive shaft 28, the voltage corresponds to the torque of the motor 26 and the phase is related to the direction of rotation of the drive shaft 28. Hence, by controlling the frequency, voltage and phase of the motor 26 the speed, torque and direction thereof can be controlled. Other types of motors, including DC motors, can also be used in conjunction with the present invention.

Fig. 1 further indicates that the car door operation control system 10 is configured to communicate with an elevator car control system 50. Elevator car control system 50 is indicated merely schematically by box 50 in Fig. 1 and will be described only to the extent necessary for understanding the present invention. Elevator car control system 50 controls movement of the elevator car by allowing or preventing application of drive signals to the drive and brakes of the elevator car. In particular, elevator car control system 50 prevents movement of the elevator car in case an unsafe condition exists, particularly in case the car door is not fully closed. For that reason, elevator car control system 50 is configured to receive signals from a safety arrangement, e.g. in the configuration of a safety chain, including a number of safety switches. The elevator car control system 50 is configured to receive from a door safety switch of the elevator safety arrangement a Primary Door Closed Signal indicating whether the status of the elevator car door or all elevator car doors is closed.

As shown in Fig. 2, the pulse encoder 16 for generating and detecting pulses when the car door 12 is in motion includes an encoder disc 32 rigidly mounted on the drive shaft 28 of the motor 26. In the preferred embodiment, the pulse encoder 16 also includes a light source 34 disposed on one side on the encoder disc 32 and a light receiver 36 disposed on the opposite side of the encoder disc 32. The encoder disc 32, in such an embodiment, includes a plurality of regularly spaced openings 38 about the periphery thereof. In operation, when the drive shaft 28 rotates, the encoder disc 32 acts as a light chopper to provide a stream of light pulses to the light receiver 36. In response to each light pulse striking the light receiver 36, the light receiver 36 generates an electrical output signal. As shown, the electrical signals so generated are outputted to the door operation controller 18 for controlling the elevator door drive 14.

The car door operation controller 18 includes means for counting pulses and means for applying the counted pulses, as a percentage of the total number of pulses for full door travel in one direction, to the door travel curve. The car door operation controller 18 may include a microprocessor and an associated memory wherein the preselected travel curve is stored. Further, the memory may also be provided with the relevant motor characteristics, such as the voltage/torque ratio, the frequency/speed ratio and the phase/direction information. The car door operation controller 18 further includes voltage, frequency and phase output signals for controlling the torque, speed and direction, respectively, of the motor 26.

In operation, the car door operation controller 18 is initialized so that the travel curve represented in the memory is executed each time the car door 12 is opened or closed. In a typical travel curve the distance travelled by the door is shown on a scale of percentage movement with the full travel of the car door 12 being 100%. The motor switching points, e.g. from high torque to high speed or high speed to high torque, are located at predetermined points along the door path. Usually, in such travel curve the distance travelled by the car door 12 is plotted along the horizontal axis with the vertical axis representing the speed of the car door 12 during the travel. When a signal to close the car door 12 is received the car door begins to move at a very slow speed, i.e., a creeping speed. The car door 12 continues to move at this speed for say between about 0% to about 10% of the total distance to be traveled. Thereafter, the speed is ramped up to a closing speed, typically the ramping occurs over about the next 10% of the total distance to be travelled by the car door 12. Once the closing speed is reached the car door 12 continues to move at that speed for typically about the next 50% of the total distance to be travelled by the car door 12. When the car door 12 has travelled about 70% of the total distance, the speed of the motor 26 may be reduced to a preselected closing speed over the next 20% of the total distance travelled. Thereafter, the car door 12 continues at that closing speed until a mechanical stop is reached. The speed versus distance profile can, in essence, be reversed in order to open the car door 12. In fact, it will be recognized that the speed change points as well as the actual speeds can be varied to suit any car door or generate any profile desired. For example, the profile can be adjusted for either a single door or a double door, the profile can be adjusted to accommodate any desired motor as well as to accommodate various gear systems. Advantageously, by being able to make such adjustments, the elevator car door operation control 10 for controlling the car door 12 is an autonomous system applicable and adaptable for use with any elevator door system. With the incremental encoder system shown in Figs. 1 and 2, the motor control points along the travel curve are flagged or indicated to the car door operation controller 18 by the means for applying the number of pulses counted with the stored travel curve so that the position of the car door is always "known" to the door operation controller 18.

The elevator car door operation control system 10 requires a single initialization in order to learn the number of counts associated with a full travel of the car door 12 from the fully open position to the fully closed position, or vice versa. Once initialized, the car door operation controller 18 can thus control the movement of the car door 12 in accordance with the number of pulses counted. To accomplish initialization, at the time of installation, the car door 12 is moved from one extreme position to the other extreme position, i.e., the car door 12 is either opened or closed. The car door 12 is driven to a mechanical stop, i.e., either fully opened or fully closed. When the mechanical stop is reached the pulse counter is set to zero. The car door 12 is then driven to the opposite mechanical stop, i.e., fully closed or fully opened, respectively, at a predetermined constant speed. During this movement the number of pulses generated by pulse encoder 16 are counted. The time required for completion of the distance travelled by the door is measured as well. As a result, a reference speed is determined in relation to the number of pulses counted. Further the total number of pulses occurring during the travel between the mechanical stops are also counted and stored as the full door travel number of pulses. The installation is then completed. For control purposes, the full door travel number of pulses is then set to represent 100% of the distance travelled by the car door 12 during one direction. The 100% normalization is then used by the car door operation controller 18 to control the motor 26 in accordance with the travel curve.

As the car door operation controller 18, once initialized, knows the full travel distance of the car door 12 and calculates the speed and torque profile of the car door 12 accordingly, the present embodiment suggests to use the car door travel distance information of the door operation controller 18 also by the elevator car control system 50 for the purpose of obtaining a secondary Elevator Car Door Closed signal independent of the primary Elevator Car Door Closed signal provided by the safety contact of the car door 12, such as the car door safety switch connected in the safety chain. Such secondary Elevator Car Door Closed signal, in the following also referred to as the Door Fully Closed Monitoring signal (DFCM), can then be used by the elevator car control system to make sure that the elevator car only moves when the car doors 12 are fully closed, even in situations where the elevator car door safety contacts providing the primary Elevator Car Door Closed signal are bypassed.

As the car door position information available from the car door operation control system 10 (car door operation controller 18) is an incremental travel distance measurement indicative of the travel distance between the last two stops of the car door, it cannot be used directly to provide the required secondary Elevator Car Door Closed signal (Door Fully Closed Monitoring signal DFCM) sufficiently reliably to the elevator car control system 50. Rather, an absolute measurement of the position of the car door 12, as provided by the car door safety contact, would be required for such purpose. According to the embodiments set out herein, a specific control is suggested to obtain from the incremental car door travel distance measurement used in the car door control system 10 car door position information with sufficient reliability to mimic an absolute measurement of the car door position, at least when the car door 12 is in the fully closed position. This is important, particularly considering that most likely situations will occur where the initial position of the car door 12 is unclear.

Fig. 1 indicates two typical situations that might occur when the car door 12 has moved to the Door Fully Closed position.

In the situation indicated by A in Fig. 1, the car door 12 has moved starting from the Door Fully Open position, and therefore the incremental number of pulses counted by the car door operation controller 18 will be equal to, or maybe even larger, than the full door travel number of pulses counted for the full travel distance of the car door 12, as determined during the initialization procedure of the car door control system 10, as set out above. In such situation, the incremental number of pulses counted by the car door operation controller 18 will deliver the required Door Fully Closed Monitoring signal DFCM with the desired reliability, and therefore might be used to verify that the car door 12 is indeed fully closed.

However, B in Fig. 1 indicates a more complicated situation, namely a situation where the incremental number of pulses counted by the car door operation controller 18 after the car door 12 has stopped its movement in closing direction is smaller than the full door travel number of pulses determined during initialization. Here, the initial position of the car door 12, before travelling to what might be the Door Fully Closed position, is unclear. The car door 12 might have started from an intermediate position between the Door Fully Open position and the Door Fully Closed position, and arrived at the Door Fully Closed position. Such situation might occur due to a power reset of the car door operation controller 18. However, the car door might as well have started at the Door Fully Open position and then have stopped at an intermediate position for some reason. Therefore, it is not possible to determine whether the car door 12 has started from its Car Door Fully Open position and stopped before reaching the Car Door Fully Closed position, or whether the car door 12 has started from an intermediate position and indeed has reached the Car Door Fully Closed position. To resolve such unclarity and obtain a sufficiently reliable DFCM signal, the embodiment described here suggests that the elevator car control system 50 sends a request to the car door control system (particularly to the car door controller 18) according to which the car door control system 10 provides a movement of the car door 12 in opening direction until it reaches its Car Door Fully Open position, and then moves the car door 12 again in closing direction until it reaches its other end position, i.e. ideally its Car Door Fully Closed position. This makes sure that the car door 12, immediately before the incremental pulse encoder 16 generates and detects a number of pulses which are counted by the door operation controller 18, has travelled a full travel distance from the Car Door Fully Open Position to the Car Door Fully Closed position as learned during the initialization. In that situation, it can be expected that the number of pulses counted by the car door operation controller 18 is at least equal to the full door travel number of pulses counted for the full travel distance of the car door 12. Hence, now a sufficiently reliable DFCM signal can be obtained in case the number of pulses counted by the door operation controller 18 is equal to, or larger than, the full door travel number of pulses counted for the full travel distance of the car door 12, as determined during the initialization procedure of the car door control system 10. This sequence of car door movements is indicated by the three arrows in Fig. 1 under scenario B.

It should be mentioned that the comparison between the number of pulses actually counted by the door operation controller 18 and the full door travel number of pulses counted for the full travel distance of the car door 12, as determined during the initialization procedure of the door operation controller 18, might consider a reasonable tolerance threshold.

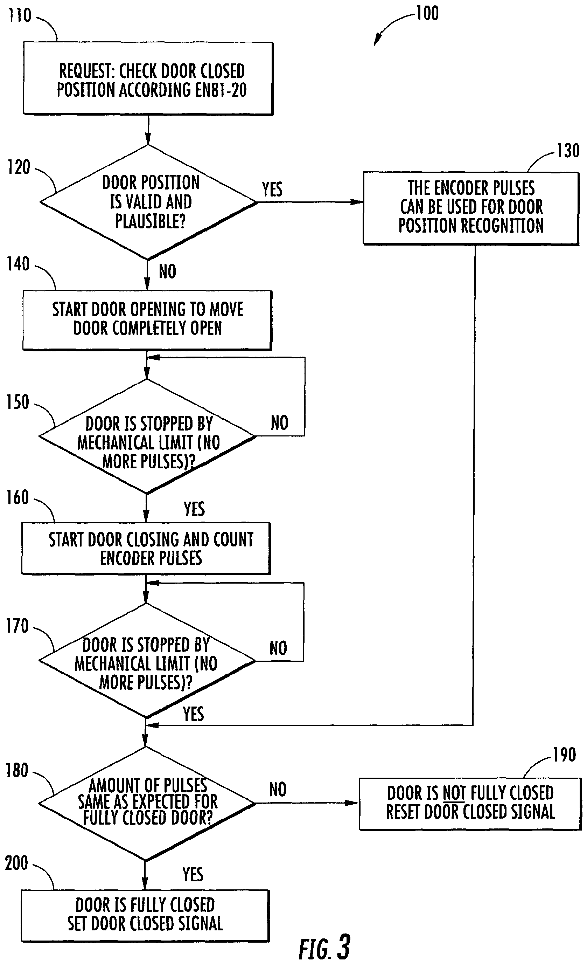

Fig. 3 shows a flow diagram describing the procedure 100 used in an embodiment of the present invention to obtain a secondary Elevator Car Door Closed signal (or Door Fully Closed Monitoring signal DFCM) based on the door travel distance signal provided by the car door operation controller 18.

At step 110 a command is produced by the elevator control to request the secondary Elevator Car Door Closed signal or Door Fully Closed Monitoring signal DFCM, independent of the primary Elevator Car Door Closed signal produced by the car door safety contact connected in the safety chain. In response to the request 110, the procedure 100 produces a DFCM signal from the car door operation control system 10 and provides such DFCM signal as feedback to the elevator car control system 50, indicating that the car doors 12 are fully closed (see step 200), or indicating that the car doors 12 are not fully closed (see step 190).

The procedure 100 follows the following steps: In step 120 a determination is made whether the car door position indicated by the number of pulses counted by the elevator car door operation controller 18 is valid and plausible, i.e. whether a situation as indicated by A in Fig. 1 is present. If the answer is yes, the procedure proceeds to step 130 and the encoder pulses counted by the door operation controller 18 in the door movement immediately preceding the request 110 are used to determine whether the car door 12 is fully closed. In step 180, it is checked whether the number of pulses counted by thecar door operation controller 18 corresponds to the number of pulses expected for the fully closed door (i.e. the full door travel number of pulses counted for the full travel distance of the car door 12, as determined during the initialization procedure of the car door operation controller 18). If the answer is yes, the Door Fully Closed Monitoring signal DFCM is set and returned to the elevator safety control system 50, step 200. If the answer is no, the Door Fully Closed Monitoring signal DFCM is reset (indicating that the car door 12 is not fully closed), and this information is returned to the elevator car control system 50, step 190. As a result, the elevator car control system will try to fully close the car doors 12, e.g. by requesting the car door operation control system 10 to re-open and close the car doors again.

If the result of the check in step 120 is that the car door position indicated by the number of pulses counted by the car door operation controller 18 is not valid and plausible, a situation as indicated by B in Fig. 1 is present. Then, the procedure proceeds to step 140 where the car door control system 10, upon request by the elevator car control system 50, starts to move the car door 12 into opening direction, until the car door 12 is completely open. The car door 12 might be considered completely open in case a mechanical switch or stop is reached during the movement in opening direction. In the embodiment shown in Fig. 3, a stop is considered to be reached in case the number of pulses detected by the encoder 16 and counted by the door operation controller 18 does not increase any further, as indicated in step 150. Alternatively, the car door 12 might be considered fully open in case the number of pulses detected by the encoder 16 and counted by the door operation controller 18 during the opening movement is equal to, or even larger than, the full door travel number of pulses. Then, in step 160 the car door 12 is moved in closing direction again and the number of encoder pulses during the closing movement is counted. Once the car door 12 is stopped again (e.g. by abutting a mechanical limit), the number of pulses counted is compared to the number of pulses expected for the fully closed car door (i.e. the full door travel number of pulses counted for the full travel distance of the car door 12, as determined during the initialization procedure of the car door operation controller 18). If the answer is yes, the Door Fully Closed Monitoring signal DFCM is set and returned to the elevator car control system 50, step 200. If the answer is no, the Door Fully Closed Monitoring signal DFCM is reset (indicating that the car door 12 is not fully closed), and this information is returned to the elevator car control system 50, step 190. As a result, the elevator car control system will try to initiate another attempt to fully close the car doors 12, e.g. by requesting the car door operation control system 10 to re-open and close the car doors 12 again.

The embodiment described above does not need any additional hardware for providing the secondary Door Fully Closed Monitoring signal DFCM to the elevator car control system 50. Moreover, it is not even necessary to provide additional communication channels, since existing communication channels of the elevator control, particularly between the elevator car control system 50 and the car door operation system 10, e.g. a CAN Bus, can be used.

A number of further features are set out in the following. These features may be realized in particular embodiments, alone or in combination with any of the other features, unless specified other:
A system for controlling an elevator, comprising a car door operation control system for controlling movement of at least one car door, the car door operating control system including an incremental encoder configured to provide a signal indicative of a travel distance of the car door to the car door operating control system, and a an elevator car control system configured to obtain a primary Car Door Closed Signal from a car door safety switch of an elevator safety control system, said elevator car control system configured to obtain a secondary Car Door Closed Signal independent of the primary Car Door Closed Signal based on the travel distance signal provided by the car door operation control system.

The embodiments discussed herein propose to use the travel distance signal of the car door operation controller, which knows the full travel distance of the door and calculates their speed and torque profile accordingly. As this information normally is just an incremental travel distance measurement between the last two stops of the car door, specific control is suggested to achieve the desired reliability of the Door Fully Closed Monitoring signal (DFCM), especially in cases where the initial position of the car door is unclear. The following conditions are to be met, according to specific embodiments: (1) A full door travel learning must have been performed once in the installation. (2) The last door close operation must have done a full travel distance as learned during initialization, considering a reasonable tolerance in both directions. (3) If not a full travel distance has been performed the door must re-open and close. Thereby condition (2) is realized.

A command by the elevator car control system shall identify the request for the monitoring signal by the car door operation control system. A DFCM signal from the car door operation control system shall provide feedback to the elevator car control system that the car doors are fully closed.

No additional hardware, e.g. sensor or contact plus the corresponding switching elements like a vane or magnet, is required. Moreover, existing communication channels between the elevator car control system and the car door operation control system may be used, e.g. a CAN Bus.

Further embodiments may include any of the following optional features, alone or in combination:
The system may be configured to prevent movement of the elevator car in case none of the primary Car Door Closed Signal and the secondary Car Door Closed signal is provided to the elevator safety control system.

The secondary Car Door Closed Signal may be provided to the elevator car control system in response to the car door safety switch being bypassed.

The car door safety switch may be connected in the safety chain of an elevator system. Usually, a higher signal integrity level is required for signals related to the safety chain of an elevator. Therefore, the primary Car Door Closed Signal may have a high level of signal reliability (safety integrity level) compared to normal control signals.

The incremental encoder may comprise a pulse encoder for generating and detecting pulses when the car door is in motion.

The car door operation control system may include a car door operation controller and the pulse encoder may include an encoder disc rigidly mounted on a drive shaft of a car door drive; a light source disposed on one side of the encoder disc; and a light receiver disposed on the opposite side of the encoder disc; the encoder disc including a plurality of regularly spaced openings about the periphery thereof, such that upon rotation of the drive shaft the encoder disc acts as a light chopper to provide a stream of light pulses to the light receiver, thereby generating, in response to each light pulse striking the light receiver, an electrical pulse signal to the door operation controller, the door operation controller including means for counting the pulse signals.

The secondary Car Door Closed Signal may be provided in case the travel distance signal provided by the incremental encoder is corresponding to at least a travel distance between a fully open position and a fully closed position of the car door, as determined during an initialization procedure of the car door operation control system.

In case the travel distance signal provided by the incremental encoder is corresponding to a smaller travel distance than the travel distance between a fully open position and a fully closed position of the car door, as determined during an initialization procedure of the car door operation control system ,the system may be configured to initiate: (i) moving the car door in opening direction until it stops when reaching its end position; (ii) then moving the car door again in closing direction until it stops when reaching its other end position while detecting the travel distance by the incremental encoder during movement of the car door in closing direction; (iii) providing the secondary Car Door Closed Signal in case the travel distance signal provided by the incremental encoder in step (ii) is corresponding to at least the travel distance between a fully open position and a fully closed position of the car door, as determined during the initialization procedure of the car door operation control system.

Further provided is a method for controlling an elevator, comprising controlling movement of at least one car door by a car door operation control system including an incremental encoder configured to provide a signal indicative of a travel distance of the car door to the car door operating control system, and providing a primary Car Door Closed Signal to an elevator car control system by a car door safety switch, the method comprising obtaining a secondary Car Door Closed Signal independent of the primary Car Door Closed Signal based on the travel distance signal provided by the car door operation control system.

Further embodiments may include any of the following optional features, alone or in combination:
The method further may comprise preventing movement of the elevator car in case none of the primary Car Door Closed Signal and the secondary Car Door Closed signal is provided to the elevator safety control system.

The method further may comprise providing the secondary Car Door Closed Signal to the elevator car control system in response to the car door safety switch being bypassed.

The car door safety switch may be connected in the safety chain of an elevator system.

The method further may comprise generating and detecting pulses when the car door is in motion by use of a pulse encoder.

The car door operation control system may include a car door operation controller and the pulse encoder may include an encoder disc rigidly mounted on a drive shaft of a car door drive; a light source disposed on one side of the encoder disc; and a light receiver disposed on the opposite side of the encoder disc; the encoder disc including a plurality of regularly spaced openings about the periphery thereof, such that upon rotation of the drive shaft the encoder disc acts as a light chopper to provide a stream of light pulses to the light receiver, thereby generating, in response to each light pulse striking the light receiver, an electrical pulse signal to the door operation controller, the door operation controller including means for counting the pulse signals.

The secondary Car Door Closed Signal may be provided in case the travel distance signal provided by the incremental encoder is corresponding to at least a travel distance between a fully open position and a fully closed position of the car door, as determined during an initialization procedure of the car door operation control system.

In case the travel distance signal provided by the incremental encoder is corresponding to a smaller travel distance than the travel distance between a fully open position and a fully closed position of the car door, as determined during an initialization procedure of the car door operation control system the method may comprise: (i) moving the car door in opening direction until it stops when reaching its end position; (ii) then moving the car door again in closing direction until it stops when reaching its other end position while detecting the travel distance signal provided by the incremental encoder during movement of the car door in closing direction; (iii) providing the secondary Car Door Closed Signal in case the travel distance signal provided by the incremental encoder in step (ii) is corresponding to at least the travel distance between a fully open position and a fully closed position of the car door, as determined during the initialization procedure of the car door operation control system.

Although the present invention has been discussed and described herein with respect to one or more specific embodiments it will be understood that other arrangements or configurations can also be made that do not depart from the scope of the invention. Hence, the present invention is deemed limited only by the claims appended hereto.

### List of reference signs:

- 10:: elevator door operation control system
- 12:: elevator door
- 14:: door drive
- 16:: pulse encoder
- 18:: car door operation controller
- 26:: motor
- 28:: drive shaft
- 30:: means for converting rotational motion of drive shaft to linear motion of car door
- 32:: encoder disc
- 34:: light source
- 36:: light receiver
- 38:: opening
- 50:: elevator car control system
- 100:: procedure for obtaining secondary Elevator Car Door Closed Signal
- 110:: request: Check Door Closed Position
- 120:: check: Is door position is valid and plausible
- 130:: encoder pulses can be used for position recognition
- 140:: start door opening to move door completely open
- 150:: check: Door is stopped by mechanical limit (no more pulses)?
- 160:: start door closing and count encoder pulses
- 170:: check: Door is stopped by mechanical limit (no more pulses)?
- 180:: check: Amount of pulses same as expected for fully closed door?
- 190:: door is not fully closed; reset Door Closed Signal
- 200:: door is fully closed; set Door Closed Signal

## Claims

1. A system for controlling an elevator, comprising
a car door operation control system (10) for controlling movement of at least one car door (12), the car door operating control system (10) including an incremental encoder configured to provide a signal indicative of a travel distance of the car door to the car door operating control system (10), and
an elevator car control system (50) configured to obtain a primary Car Door Closed Signal from a car door safety switch of an elevator safety control system,
**characterized in that**
said elevator car control system (50) is configured to obtain a secondary Car Door Closed Signal (DFCM) independent of the primary Car Door Closed Signal based on the travel distance signal provided by the car door operation control system (10).

2. The system according to claim 1, being configured to prevent movement of an elevator car in case none of the primary Car Door Closed Signal and the secondary Car Door Closed signal (DFCM) is provided to the elevator safety control system (50).

3. The system according to claim 1 or 2, wherein the secondary Car Door Closed Signal (DFCM) is provided to the elevator car control system (50) in response to the car door safety switch being bypassed.

4. The system according to any of claims 1 to 3, wherein the car door safety switch is connected in a safety chain of an elevator system.

5. The system according to any of claims 1 to 4, wherein the incremental encoder comprises a pulse encoder (16) for generating and detecting pulses when the car door (12) is in motion.

6. The system according to claim 5, wherein the car door operation control system (10) includes a car door operation controller (18) and the pulse encoder (16) includes an encoder disc (32) rigidly mounted on a drive shaft (28) of a car door drive (26); a light source (34) disposed on one side of the encoder disc (32); and a light receiver (36) disposed on the opposite side of the encoder disc (32); the encoder disc (32) including a plurality of regularly spaced openings (38) about the periphery thereof, such that upon rotation of the drive shaft (28) the encoder disc (32) acts as a light chopper to provide a stream of light pulses to the light receiver (36), thereby generating, in response to each light pulse striking the light receiver (36), an electrical pulse signal to the door operation controller (18), the door operation controller (18) including means for counting the pulse signals.

7. The system according to any of claims 1 to 6, wherein the secondary Car Door Closed Signal (DFCM) is provided in case the travel distance signal provided by the incremental encoder is corresponding to at least a travel distance between a fully open position and a fully closed position of the car door (12), as determined during an initialization procedure of the car door operation control system (10).

8. The system according to any of claims 1 to 7, wherein, in case the travel distance signal provided by the incremental encoder is corresponding to a smaller travel distance than the travel distance between a fully open position and a fully closed position of the car door (12), as determined during an initialization procedure of the car door operation control system (10) the elevator car control system (50) is configured to initiate: (i) moving the car door (12) in opening direction until it stops when reaching its end position; (ii) then moving the car door (12) again in closing direction until it stops when reaching its other end position while detecting the travel distance by the incremental encoder during movement of the car door in closing direction; (iii) providing the secondary Car Door Closed Signal (DFCM) in case the travel distance signal provided by the incremental encoder in step (ii) is at least corresponding to the travel distance between a fully open position and a fully closed position of the car door (12), as determined during the initialization procedure of the car door operation control system (10).

9. A method for controlling an elevator, comprising
controlling movement of at least one car door (12) by a car door operation control system (10) including an incremental encoder configured to provide a signal indicative of a travel distance of the car door (12) to the car door operating control system (10), and
providing a primary Car Door Closed Signal to an elevator car control system (50) by a car door safety switch,
the method comprising obtaining a secondary Car Door Closed Signal (DFCM) independent of the primary Car Door Closed Signal based on the travel distance signal provided by the car door operation control system (10).

10. The method according to claim 9, further comprising preventing movement of the elevator car in case none of the primary Car Door Closed Signal and the secondary Car Door Closed signal (DFCM) is provided to the elevator car control system (50).

11. The method according to claim 9 or 10, comprising providing the secondary Car Door Closed Signal (DFCM) to the elevator car control system (50) in response to the car door safety switch being bypassed; and/or
wherein the car door safety switch is connected in a safety chain of an elevator system.

12. The method according to any of claims 9 to 11, comprising generating and detecting pulses when the car door (12) is in motion by use of a pulse encoder (16).

13. The method according to claim 12, wherein the car door operation control system (10) includes a car door operation controller (18) and the pulse encoder (16) includes an encoder disc (32) rigidly mounted on a drive shaft (28) of a car door drive (26); a light source (34) disposed on one side of the encoder disc (32); and a light receiver (36) disposed on the opposite side of the encoder disc (32); the encoder disc (32) including a plurality of regularly spaced openings (38) about the periphery thereof, such that upon rotation of the drive shaft (28) the encoder disc (32) acts as a light chopper to provide a stream of light pulses to the light receiver (36), thereby generating, in response to each light pulse striking the light receiver (36), an electrical pulse signal to the door operation controller (18), the door operation controller (18) including means for counting the pulse signals.

14. The method according to any of claims 9 to 13, wherein the secondary Car Door Closed Signal (DFCM) is provided in case the travel distance signal provided by the incremental encoder is at least corresponding to a travel distance between a fully open position and a fully closed position of the car door (12), as determined during an initialization procedure of the car door operation control system (10).

15. The method according to any of claims 9 to 14, further comprising, in case the travel distance signal provided by the incremental encoder is corresponding to a smaller travel distance than the travel distance between a fully open position and a fully closed position of the car door (12), as determined during the initialization procedure of the car door operation control system (10) : (i) moving the car door (12) in opening direction until it stops when reaching its end position; (ii) then moving the car door (12) again in closing direction until it stops when reaching its other end position while detecting the travel distance signal provided by the incremental encoder during movement of the car door in closing direction; (iii) providing the secondary Car Door Closed Signal (DFCM) in case the travel distance signal provided by the incremental encoder in step (ii) is corresponding to a travel distance at least equal to the travel distance between a fully open position and a fully closed position of the car door (12), as determined during the initialization procedure of the car door operation control system (10).

## Patentansprüche

1. System zum Steuern eines Aufzugs, umfassend
ein Kabinentürbetriebssteuerungssystem (10) zum Steuern einer Bewegung von mindestens einer Kabinentür (12), wobei das Kabinentürbetriebssteuerungssystem (10) einen Inkrementalgeber beinhaltet, der konfiguriert ist, um ein Signal, das eine Fahrstrecke der Kabinentür (10) anzeigt, an das Kabinentürbetriebssteuerungssystem bereitzustellen, und
ein Aufzugskabinensteuerungssystem (50), das konfiguriert ist, um ein primäres Kabinentürschließsignal von einem Kabinentürsicherheitsschalter eines Aufzugssicherheitssteuerungssystems zu erhalten,
**dadurch gekennzeichnet, dass**
das Aufzugskabinensteuerungssystem (50) konfiguriert ist, um ein sekundäres Kabinentürschließsignal (Car Door Closed Signal - DFCM) unabhängig vom primären Kabinentürschließsignal basierend auf dem Fahrstreckensignal, das durch das Kabinentürbetriebssteuerungssystem (10) bereitgestellt wird, zu erhalten.

2. System nach Anspruch 1, das konfiguriert ist, um eine Bewegung einer Aufzugskabine zu verhindern, falls keines des primären Kabinentürschließsignals und des sekundären Kabinentürschließsignals (DFCM) an das Aufzugssicherheitssteuerungssystem (50) bereitgestellt wird.

3. System nach Anspruch 1 oder 2, wobei das sekundäre Kabinentürschließsignal. (DFCM) als Reaktion auf ein Umgehen des Kabinentürsicherheitsschalters an das Aufzugskabinensteuerungssystem (50) bereitgestellt wird.

4. System nach einem der Ansprüche 1 bis 3, wobei der Kabinentürsicherheitsschalter in einer Sicherheitskette eines Aufzugssystems verbunden ist.

5. System nach einem der Ansprüche 1 bis 4, wobei der Inkrementalgeber einen Impulsgeber (16) zum Erzeugen und Erfassen von Impulsen umfasst, wenn die Kabinentür (12) in Bewegung ist.

6. System nach Anspruch 5, wobei das Kabinentürbetriebssteuerungssystem (10) eine Kabinentürbetriebssteuerung (18) beinhaltet und der Impulsgeber (16) eine Geberscheibe (32) beinhaltet, die starr auf einer Antriebswelle (28) eines Kabinentürantriebs (26) montiert ist; eine Lichtquelle (34), die auf einer Seite der Geberscheibe (32) angeordnet ist; und einen Lichtempfänger (36), der auf der gegenüberliegenden Seite der Geberscheibe (32) angeordnet ist; wobei die Geberscheibe (32) eine Vielzahl von regelmäßig beabstandeten Öffnungen (38) um ihren Umfang herum beinhaltet, sodass die Geberscheibe (32) bei Drehung der Antriebswelle (28) als Lichtzerhacker wirkt, um einen Strom von Lichtimpulsen an den Lichtempfänger (36) bereitzustellen, wodurch als Reaktion auf jeden Lichtimpuls, der auf den Lichtempfänger (36) trifft, ein elektrisches Impulssignal an die Türbetriebssteuerung (18) erzeugt wird, wobei die Türbetriebssteuerung (18) Mittel zum Zählen der Impulssignale beinhaltet.

7. System nach einem der Ansprüche 1 bis 6, wobei das sekundäre Kabinentürschließsignal (DFCM) bereitgestellt wird, falls das vom Inkrementalgeber bereitgestellte Fahrstreckensignal mindestens einer Fahrstrecke zwischen einer vollständig geöffneten Position und einer vollständig geschlossenen Position der Kabinentür (12) entspricht, wie sie während eines Initialisierungsvorgangs des Kabinentürbetriebssteuerungssystems (10) bestimmt wurde.

8. System nach einem der Ansprüche 1 bis 7, wobei, falls das vom Inkrementalgeber bereitgestellte Fahrstreckensignal einer kleineren Fahrstrecke entspricht als der Fahrstrecke zwischen einer vollständig geöffneten Position und einer vollständig geschlossenen Position der Kabinentür (12), wie sie während eines Initialisierungsvorgangs des Kabinentürbetriebssteuerungssystems (10) bestimmt wurde, das Aufzugskabinensteuerungssystem (50) zum Einleiten von Folgendem konfiguriert ist: (i) Bewegen der Kabinentür (12) in Öffnungsrichtung, bis sie bei Erreichen ihrer Endposition stoppt; (ii) dann erneutes Bewegen der Kabinentür (12) in Schließrichtung, bis sie bei Erreichen ihrer anderen Endposition stoppt, während sie die Fahrstrecke durch den Inkrementalgeber während der Bewegung der Kabinentür in Schließrichtung erfasst; (iii) Bereitstellen des sekundären Kabinentürschließsignals (DFCM), falls das vom Inkrementalgeber in Schritt (ii) bereitgestellte Fahrstreckensignal mindestens der Fahrstrecke zwischen einer vollständig geöffneten Position und einer vollständig geschlossenen Position der Kabinentür (12) entspricht, wie sie während des Initialisierungsvorgangs des Kabinentürbetriebssteuerungssystems (10) bestimmt wurde.

9. Verfahren zum Steuern eines Aufzugs, umfassend Steuern einer Bewegung mindestens einer Kabinentür (12) durch ein Kabinentürbetriebssteuerungssystem (10) mit einem Inkrementalgeber, der konfiguriert ist, um ein Signal, das eine Fahrstrecke der Kabinentür (12) anzeigt, an das Kabinentürbetriebssteuerungssystem (10) bereitzustellen, und Bereitstellen eines primären Kabinentürschließsignals an ein Aufzugskabinensteuerungssystem (50) durch einen Kabinentürsicherheitsschalter,
wobei das Verfahren ein Erhalten eines sekundären Kabinentürschließsignals (DFCM) unabhängig vom primären Kabinentürschließsignal basierend auf dem Fahrstreckensignal, das von dem Kabinentürbetriebssteuerungssystem (10) bereitgestellt wird, umfasst.

10. Verfahren nach Anspruch 9, ferner umfassend ein Verhindern einer Bewegung der Aufzugskabine, falls keines des primären Kabinentürschließsignals und des sekundären Kabinentürschließsignals (DFCM) an das Aufzugskabinensteuerungssystem (50) bereitgestellt wird.

11. Verfahren nach Anspruch 9 oder 10, umfassend ein Bereitstellen des sekundären Kabinentürschließsignals (DFCM) an das Aufzugskabinensteuerungssystem (50) als Reaktion auf ein Umgehen des Kabinentürsicherheitsschalters; und/oder wobei der Kabinentürsicherheitsschalter in einer Sicherheitskette eines Aufzugssystems verbunden ist.

12. Verfahren nach einem der Ansprüche 9 bis 11, umfassend ein Erzeugen und Erfassen von Impulsen, wenn die Kabinentür (12) in Bewegung ist, unter Verwendung eines Impulsgebers (16) .

13. Verfahren nach Anspruch 12, wobei das Kabinentürbetriebssteuerungssystem (10) eine Kabinentürbetriebssteuerung (18) beinhaltet und der Impulsgeber (16) eine Geberscheibe (32) beinhaltet, die starr auf einer Antriebswelle (28) eines Kabinentürantriebs (26) montiert ist; eine Lichtquelle (34), die auf einer Seite der Geberscheibe (32) angeordnet ist; und einen Lichtempfänger (36), der auf der gegenüberliegenden Seite der Geberscheibe (32) angeordnet ist; wobei die Geberscheibe (32) eine Vielzahl von regelmäßig beabstandeten Öffnungen (38) um ihren Umfang herum beinhaltet, sodass die Geberscheibe (32) bei Drehung der Antriebswelle (28) als Lichtzerhacker wirkt, um einen Strom von Lichtimpulsen an den Lichtempfänger (36) bereitzustellen, wodurch als Reaktion auf jeden Lichtimpuls, der auf den Lichtempfänger (36) trifft, ein elektrisches Impulssignal an die Kabinentürbetriebssteuerung (18) erzeugt wird, wobei die Kabinentürbetriebssteuerung (18) Mittel zum Zählen der Impulssignale beinhaltet.

14. Verfahren nach einem der Ansprüche 9 bis 13, wobei das sekundäre Kabinentürschließsignal (DFCM) bereitgestellt wird, falls das vom Inkrementalgeber bereitgestellte Fahrstreckensignal mindestens einer Fahrstrecke zwischen einer vollständig geöffneten Position und einer vollständig geschlossenen Position der Kabinentür (12) entspricht, wie sie während eines Initialisierungsvorgangs des Kabinentürbetriebssteuerungssystems (10) bestimmt wurde.

15. Verfahren nach einem der Ansprüche 9 bis 14, ferner umfassend, falls das vom Inkrementalgeber bereitgestellte Fahrstreckensignal einer kleineren Fahrstrecke entspricht als der Fahrstrecke zwischen einer vollständig geöffneten Position und einer vollständig geschlossenen Position der Kabinentür (12), wie sie während des Initialisierungsvorgangs des Kabinentürbetriebssteuerungssystems (10) bestimmt wurde: (i) Bewegen der Kabinentür (12) in Öffnungsrichtung, bis sie bei Erreichen ihrer Endposition stoppt; (ii) dann erneutes Bewegen der Kabinentür (12) in Schließrichtung, bis sie bei Erreichen ihrer anderen Endposition stoppt, während sie das durch den Inkrementalgeber bereitgestellte Fahrstreckensignal während der Bewegung der Kabinentür in Schließrichtung erfasst; (iii) Bereitstellen des sekundären Kabinentürschließsignals (DFCM), falls das vom Inkrementalgeber in Schritt (ii) bereitgestellte Fahrstreckensignal mindestens der Fahrstrecke zwischen einer vollständig geöffneten Position und einer vollständig geschlossenen Position der Kabinentür (12) entspricht, wie sie während des Initialisierungsvorgangs des Kabinentürbetriebssteuerungssystems (10) bestimmt wurde.

## Revendications

1. Système de commande d'ascenseur, comprenant un système de commande de fonctionnement de porte de cabine (10) qui permet de commander le mouvement d'au moins une porte de cabine (12), le système de commande de fonctionnement de porte de cabine (10) comprenant un codeur incrémentiel conçu pour fournir un signal indiquant une distance parcourue par la porte de cabine au système de commande de fonctionnement de porte de cabine (10), et un système de commande de cabine d'ascenseur (50) conçu pour obtenir un signal principal de porte de cabine fermée en provenance d'un interrupteur de sécurité de porte de cabine d'un système de commande de sécurité d'ascenseur,
**caractérisé en ce que**
ledit système de commande de cabine d'ascenseur (50) est conçu pour obtenir un signal secondaire de porte de cabine fermée (DFCM) indépendant du signal principal de porte de cabine fermée en fonction du signal de distance parcourue fourni par le système de commande de fonctionnement de porte de cabine (10).

2. Système selon la revendication 1, conçu pour empêcher le mouvement d'une cabine d'ascenseur dans le cas où aucun signal parmi le signal principal de porte de cabine fermée et le signal secondaire de porte de cabine fermée (DFCT) n'est fourni au système de commande de cabine d'ascenseur (50).

3. Système selon la revendication 1 ou 2, dans lequel le signal secondaire de porte de cabine fermée (DFCM) est fourni au système de commande de cabine d'ascenseur (50) en réponse au court-circuitage de l'interrupteur de sécurité de porte de cabine.

4. Système selon l'une quelconque des revendications 1 à 3, dans lequel l'interrupteur de sécurité de porte de cabine est connecté dans une chaîne de sécurité d'un système d'ascenseur.

5. Système selon l'une quelconque des revendications 1 à 4, dans lequel le codeur incrémentiel comprend un codeur d'impulsions (16) permettant de générer et de détecter des impulsions lorsque la porte de cabine (12) est en mouvement.

6. Système selon la revendication 5, dans lequel le système de commande de fonctionnement de porte de cabine (10) comprend un contrôleur de fonctionnement de porte de cabine (18), et le codeur d'impulsions (16) comprend un disque de codage (32) solidarisé à un arbre d'entraînement (28) d'un entraînement de porte de cabine (26) ; une source de lumière (34) disposée sur un côté du disque de codage (32) ; et un récepteur optique (36) disposé sur le côté opposé du disque de codage (32) ; le disque de codage (32) comprenant une pluralité d'ouvertures régulièrement espacées (38) sur sa périphérie, de sorte que lors de la rotation de l'arbre d'entraînement (28), le disque de codage (32) agit comme un hacheur de flux lumineux afin de fournir un flux d'impulsions lumineuses au récepteur optique (36), générant ainsi, en réponse à chaque impulsion lumineuse frappant le récepteur optique (36), un signal d'impulsion électrique au contrôleur de fonctionnement de porte (18), le contrôleur de fonctionnement de porte (18) comprenant un moyen pour compter les signaux d'impulsions.

7. Système selon l'une quelconque des revendications 1 à 6, dans lequel le signal secondaire de porte de cabine fermée (DFCM) est fourni dans le cas où le signal de distance parcourue fourni par le codeur incrémentiel correspond à au moins une distance parcourue entre une position d'ouverture complète et une position de fermeture complète de la porte de cabine (12), telles que déterminées pendant une procédure d'initialisation du système de commande de fonctionnement de porte de cabine (10) .

8. Système selon l'une quelconque des revendications 1 à 7, dans lequel, dans le cas où le signal de distance parcourue fourni par le codeur incrémentiel correspond à une distance parcourue inférieure à la distance parcourue entre une position d'ouverture complète et une position de fermeture complète de la porte de cabine (12), telles que déterminées pendant une procédure d'initialisation du système de commande de fonctionnement de porte de cabine (10), le système de commande de cabine d'ascenseur (50) est conçu pour initier : (i) le déplacement de la porte de cabine (12) dans la direction d'ouverture jusqu'à ce qu'elle s'arrête lorsqu'elle atteint sa position finale ; (ii) puis le déplacement de la porte de cabine (12) de nouveau dans la direction de fermeture jusqu'à ce qu'elle s'arrête lorsqu'elle atteint son autre position finale alors que la distance parcourue est détectée par le codeur incrémentiel pendant le déplacement de la porte de cabine dans la direction de fermeture ; (iii) la fourniture du signal secondaire de porte de cabine fermée (DFCM) dans le cas où le signal de distance parcourue fourni par le codeur incrémentiel à l'étape (ii) correspond au moins à la distance parcourue entre une position d'ouverture complète et une position de fermeture complète de la porte de cabine (12), telles que déterminées pendant la procédure d'initialisation du système de commande de fonctionnement de porte de cabine (10) .

9. Procédé de commande d'un ascenseur, consistant à commander le déplacement d'au moins une porte de cabine (12) par un système de commande de fonctionnement de porte de cabine (10) comprenant un codeur incrémentiel conçu pour fournir un signal indiquant une distance parcourue de la porte de cabine (12) au système de commande de fonctionnement de porte de cabine (10) ; et fournir un signal principal de porte de cabine fermée à un système de commande de cabine d'ascenseur (50) par un interrupteur de sécurité de porte de cabine,
le procédé consistant à obtenir un signal secondaire de porte de cabine fermée (DFCM) indépendant du signal principal de porte de cabine fermée en fonction du signal de distance parcourue fourni par le système de commande de fonctionnement de porte de cabine (10).

10. Procédé selon la revendication 9, consistant en outre à empêcher le mouvement de la cabine d'ascenseur dans le cas où aucun signal parmi le signal principal de porte de cabine fermée et le signal secondaire de porte de cabine fermée (DFCT) n'est fourni au système de commande de cabine d'ascenseur (50).

11. Procédé selon la revendication 9 ou 10, consistant à fournir le signal secondaire de porte de cabine fermée (DFCM) au système de commande de cabine d'ascenseur (50) en réponse au court-circuitage de l'interrupteur de sécurité de porte de cabine ; et/ou
dans lequel l'interrupteur de sécurité de porte de cabine est connecté dans une chaîne de sécurité d'un système d'ascenseur.

12. Procédé selon l'une quelconque des revendications 9 à 11, consistant à générer et à détecter des impulsions lorsque la porte de cabine (12) se déplace par l'utilisation d'un codeur d'impulsions (16).

13. Procédé selon la revendication 12, dans lequel le système de commande de fonctionnement de porte de cabine (10) comprend un contrôleur de fonctionnement de porte de cabine (18), et le codeur d'impulsions (16) comprend un disque de codage (32) solidarisé à un arbre d'entraînement (28) d'un entraînement de porte de cabine (26) ; une source de lumière (34) disposée sur un côté du disque de codage (32) ; et un récepteur optique (36) disposé sur le côté opposé du disque de codage (32) ; le disque de codage (32) comprenant une pluralité d'ouvertures régulièrement espacées (38) sur sa périphérie, de sorte que lors de la rotation de l'arbre d'entraînement (28), le disque de codage (32) agit comme un hacheur de flux lumineux afin de fournir un flux d'impulsions lumineuses au récepteur optique (36), générant ainsi, en réponse à chaque impulsion lumineuse frappant le récepteur optique (36), un signal d'impulsion électrique au contrôleur de fonctionnement de porte (18), le contrôleur de fonctionnement de porte (18) comprenant un moyen pour compter les signaux d'impulsions.

14. Procédé selon l'une quelconque des revendications 9 à 13, dans lequel le signal secondaire de porte de cabine fermée (DFCM) est fourni dans le cas où le signal de distance parcourue fourni par le codeur incrémentiel correspond au moins à une distance parcourue entre une position d'ouverture complète et une position de fermeture complète de la porte de cabine (12), telles que déterminées pendant une procédure d'initialisation du système de commande de fonctionnement de porte de cabine (10) .

15. Procédé selon l'une quelconque des revendications 9 à 14, consistant en outre à, dans le cas où le signal de distance parcourue fourni par le codeur incrémentiel correspond à une distance parcourue inférieure à la distance parcourue entre une position d'ouverture complète et une position de fermeture complète de la porte de cabine (12), telles que déterminées pendant la procédure d'initialisation du système de commande de fonctionnement de porte de cabine (10) : (i) déplacer la porte de cabine (12) dans la direction d'ouverture jusqu'à ce qu'elle s'arrête lorsqu'elle atteint sa position finale ; (ii) puis déplacer la porte de cabine (12) de nouveau dans la direction de fermeture jusqu'à ce qu'elle s'arrête lorsqu'elle atteint son autre position finale alors que le signal de distance parcourue fourni par le codeur incrémentiel est détecté lors du déplacement de la porte de cabine dans la direction de fermeture ; (iii) fournir le signal secondaire de porte de cabine fermée (DFCM) dans le cas où le signal de distance parcourue fourni par le codeur incrémentiel à l'étape(ii) correspond à une distance parcourue au moins égale à la distance parcourue entre une position d'ouverture complète et une position de fermeture complète de la porte de cabine (12), telles que déterminées pendant la procédure d'initialisation du système de commande de fonctionnement de porte de cabine (10) .
